# EUROPÄISCHE PATENTSCHRIFT

(11) **EP 1 910 150 B1**
(45) Veröffentlichungstag und Bekanntmachung des Hinweises auf die Patenterteilung: **10.12.2008**
(21) Anmeldenummer: 06763800.7
(22) Anmeldetag: 20.06.2006
(51) Int. Cl.: B62D 5/04

(54) **LENKSYSTEM FÜR KRAFTFAHRZEUGE MIT GLEITENDER NULLLAGE**
STEERING SYSTEM FOR MOTOR VEHICLES, FEATURING A SLIDING NEUTRAL POSITION
SYSTEME DE DIRECTION POUR VEHICULES AUTOMOBILES A POSITION ZERO MOBILE

(30) Priorität: 20.07.2005 DE 102005033866
(43) Veröffentlichungstag der Anmeldung: 16.04.2008
(73) Patentinhaber: ROBERT BOSCH GMBH, 70442 Stuttgart (DE)
(72) Erfinder: HECKEL, Joerg, 71277 Rutesheim (DE); MAASS, Alexander, 71229 Leonberg (DE); BUERKLE, Lutz, 71229 Leonberg (DE)
(86) Internationale Anmeldenummer: PCT/EP2006/063355
(87) Internationale Veröffentlichungsnummer: WO 2007/009850

(56) Entgegenhaltungen:
- WO-A-03/013940
- WO-A1-20/04005112
- DE-A1- 10 256 306

## Beschreibung

Die Erfindung betrifft ein Lenksystem mit Hilfskraftunterstützung für Kraftfahrzeuge gemäß dem Oberbegriff des Patentanspruchs 1, sowie ein Verfahren zur Unterstützung eines Fahrers beim Lenken eines Fahrzeugs gemäß dem Oberbegriff des Patentanspruchs 5.

Aus der WO 03/013940 A1 ist ein Fahrerassistenzsystem und ein Verfahren zu dessen Betrieb bekannt. Bei dem Fahrerassistenzsystem mit einer servounterstützten Lenkung werden Umgebungsdaten einer momentanen Verkehrssituation erfasst oder abgeschätzt, momentane Bewegungsdaten des Fahrzeugs werden erfasst oder abgeschätzt und die erfassten oder abgeschätzten Umgebungsdaten werden mit den Bewegungsdaten des Fahrzeugs verglichen und der Nullpunkt der Kennlinie für die Unterstützung der Lenkhandhabe wird nach Maßgabe des Vergleichs verschoben.

Die WO 2004/005112 A1 offenbart eine hydraulische Servolenkung mit einem Lenkgetriebe und mit einem hydraulischen Aktuator zur Unterstützung einer Lenkradbetätigung durch den Fahrer eines Fahrzeugs, mit einem an der Lenksäule angekoppelten Elektromotor als Zusatzmoment-Aktuator zur aktiven Aufbringung eines Zusatz-Lenkmoments, und mit einer elektronischen Steuer- und Regelungseinheit, die eine Ermittlungseinheit zur Ermittlung eines Lenkmoments und eine Auswerte- und Auswahlschaltung aufweist, mittels der unter Berücksichtigung des ermittelten Lenkmoments oder einer davon abgeleiteten Größe sowie einer ausgewählten Lenkungs-Grundkennlinie ein Gesamtwert für das Aufbringen eines Zusatz-Lenkmoments ermittelt wird, wobei der Gesamtwert für das aufzubringende Zusatz-Lenkmoment einen fahreranhängigen Anteil und einen fahrerunabhängigen Anteil aufweist.

Die DE 102 56 306 A1 offenbart eine hydraulische Servolenkung mit einem Lenkgetriebe und einem hydraulischen Aktuator zur Unterstützung einer Lenkradbetätigung durch den Fahrer eines Fahrzeugs. Dieser Servolenkung sind Mittel zur aktiven Aufbringung eines Zusatz-Lenkmoments zugeordnet, welche zumindest einen Zusatzmoment-Aktuator und ein Erfassungsmittel für das Lenkmoment aufweisen, die als Modul an einer Lenkradwelle angeordnet sind, welche das Lenkrad mit dem Lenkgetriebe verbindet.

Moderne Fahrzeuge sind üblicherweise mit einer Hilfskraftlenkung (Servolenkung) ausgestattet, die den Fahrer beim Lenken unterstützt, indem sie die vom Fahrer aufzubringenden Lenkkräfte reduziert. Bekannte Hilfskraftlenkungen umfassen eine Stelleinrichtung, wie z.B. einen Elektromotor oder eine Hydraulikpumpe, mittels der ein bestimmtes Unterstützungsmoment auf die Lenkung ausgeübt wird. Die Höhe des Unterstützungsmoments ist üblicherweise abhängig vom Lenk- bzw. Lenkradwinkel und der Fahrgeschwindigkeit des Fahrzeugs und wird von einem Steuergerät gemäß einer vorgegebenen Charakteristik eingestellt.

Neben den genannten Hilfskraftlenkungen, die den Kraftaufwand beim Lenken verringern, sind aus dem Stand der Technik auch Lenksysteme bekannt, die den Fahrer aktiv beim Halten des Fahrzeugs in der Fahrspur unterstützen. Diese Systeme werden auch als LKS-Systeme (LKS: Lane Keeping Support) bezeichnet.

Bekannte LKS-Systeme umfassen üblicherweise ein Fahrspurerkennungssystem, wie z.B. ein Videosystem, mit dem die Krümmung der Fahrspur sowie die relative Position des Fahrzeugs (die so genannte Ablage und Orientierung) in der Fahrspur bestimmt werden können. Im Normalfall, wenn die Bewegungsbahn des Fahrzeugs etwa dem Fahrspurverlauf entspricht, wird in herkömmlicher Weise ein Unterstützungsmoment auf die Lenkung aufgebracht, das die am Lenkrad wirkenden Kräfte reduziert. Wenn jedoch die Bewegungsbahn des Fahrzeugs von einer durch den Fahrspurverlauf vorgegebenen optimalen Bewegungsbahn stark abweicht, variiert das System das auf die Lenkung ausgeübte Unterstützungsmoment und erzeugt dadurch künstliche Lenkkräfte. Diese

Lenkkräfte sind so stark, dass sie vom Fahrer haptisch erfasst werden können und den Fahrer darauf hinweisen, wie er die Lenkung betätigen müsste, um das Fahrzeug in seiner Fahrspur zu halten. Bei einem zu geringen Lenkradeinschlag spürt der Fahrer beispielsweise eine Abnahme der Lenkkräfte, wodurch er das Lenkrad automatisch stärker in die Kurve einschlägt. Bei einem zu starken Lenkradeinschlag erhöht das System dagegen die am Lenkrad wirkenden Lenkkräfte, wodurch der Fahrer das Lenkrad weiter in Nulllage bewegt.

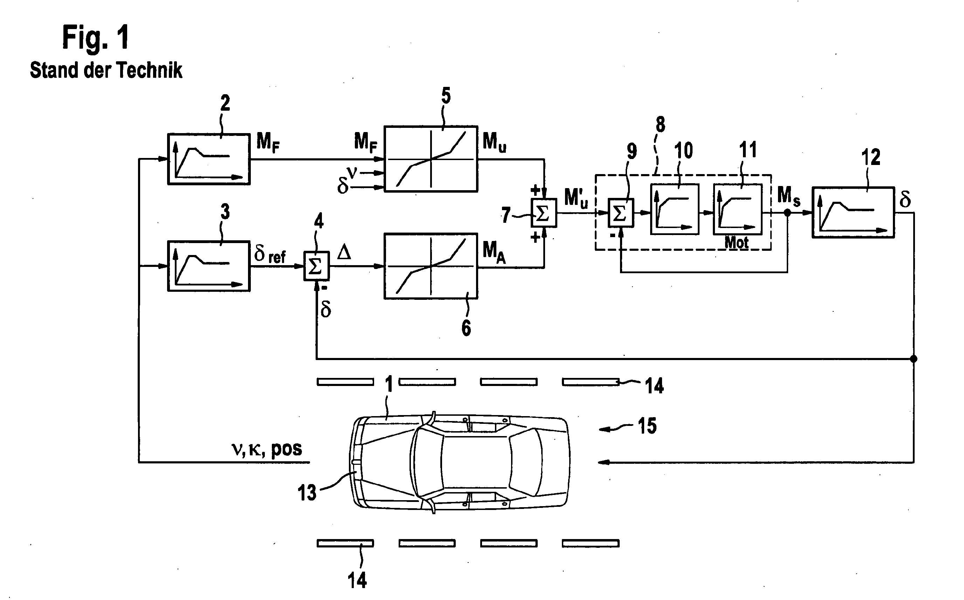

Fig. 1 zeigt einen Überblick über ein Lenksystem mit LKS-Funktion, das den Fahrer beim Halten des Fahrzeugs 1 in seiner Fahrspur 15 unterstützt. Das Gesamtsystem umfasst eine am Fahrzeug 1 angeordnete Sensorik 13 zur Fahrspurerkennung, wie z.B. ein Videosystem, mittels der die Ablage und Orientierung des Fahrzeugs 1 bezüglich seiner Fahrspur 14, sowie die Fahrspurkrümmung ermittelt werden können. Das Fahrspurerkennungssystem 13 umfasst eine Videokamera und eine spezielle Bildverarbeitungssoftware, die aus den Bilddaten die gewünschten geometrischen Daten ermittelt.

Die geometrischen Daten als auch weitere Fahr-Zustandsgrößen, wie z.B. die Fahrgeschwindigkeit, werden einem mathematischen Referenzmodell 3 zugeführt, das daraus einen Referenz-Lenkwinkel δ_{Ref} berechnet. Dieser Referenzlenkwinkel δ_{Ref} ist derjenige Lenkwinkel, der an der Lenkung eingeschlagen werden müsste, um das Fahrzeug 1 optimal in seiner Fahrspur zu halten. Solange das Fahrzeug 1 seiner Fahrspur 14 mit ausreichender Genauigkeit folgt, wird in bekannter Weise ein Unterstützungsmoment Mu bzw. ein hierzu proportionales Servomoment Ms auf die Lenkung 12 ausgeübt, um die Lenkkräfte zu verringern. Wenn die Abweichung des Fahrer-Lenkwinkels δ vom Referenzlenkwinkel δ_{Ref} eine vorgegebene Schwelle überschreitet, wird ein zusätzliches Führungsmoment M_{A} erzeugt, das zum Unterstützungsmoment Mu hinzu addiert wird (Knoten 7) und das das Gesamt-Unterstützungsmoment Mu' bzw Ms entsprechend modifiziert.

Zur Berechnung des Führungsmoments M_{A} umfasst das Lenksystem ein Übertragungsglied 6 (üblicherweise eine Kennlinienschar), das das Führungsmoment M_{A} in Abhängigkeit von der Lenkwinkelabweichung Δδ ermittelt. Die Lenkwinkelabweichung Δδ wird an einem Addierknoten 4 berechnet und dem Übertragungsglied 6 zugeführt. Das Übertragungsglied kann gegebenenfalls noch weitere Eingangsgrößen berücksichtigen.

Das Unterstützungsmoment Mᵤ wird ebenfalls mit Hilfe eines Übertragungsglieds 5 (üblicherweise eine Kennlinienschar) bestimmt. Das Übertragungsglied 5 berücksichtigt insbesondere den Lenkwinkel δ bzw. Lenkradwinkel, die Fahrgeschwindigkeit und das vom Fahrer am Lenkrad ausgeübte Moment M_{F}. Das Unterstützungsmoment Mᵤ (bei optimaler Verfolgung der Fahrspur) wird an einem Addierknoten 7 mit dem Führungsmoment M_{A} addiert und daraus ein Gesamt-Unterstützungsmoment Mᵤ' berechnet, das vom Lenksteller 11 umgesetzt wird. Das entsprechende Servomoment M_{S} wird hier mittels eines Regelkreises 8 auf den Sollwert M_{U}' geregelt.

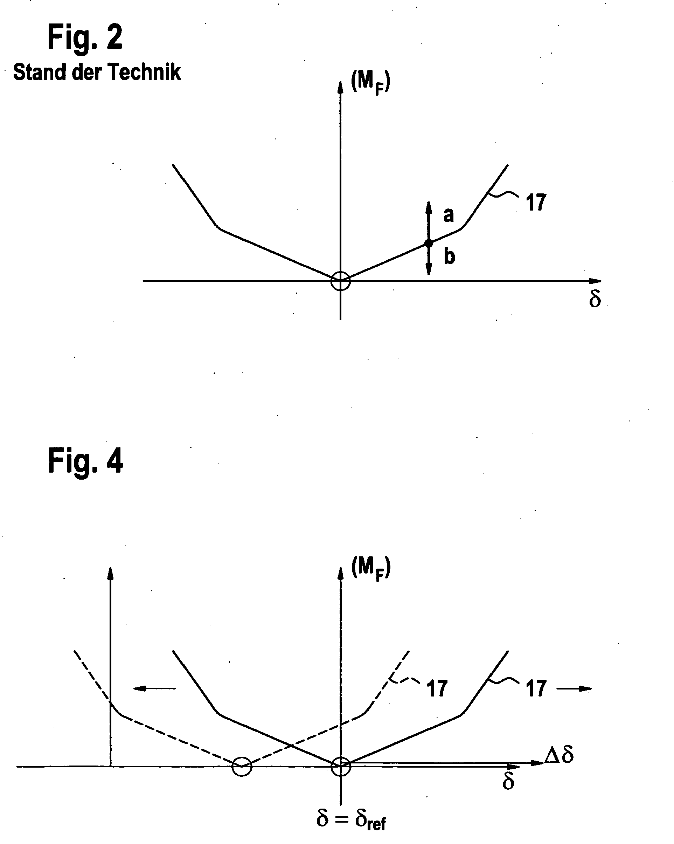

Fig. 2 zeigt eine typische Lenkcharakteristik einer Kfz-Lenkanlage. Die Lenkcharakteristik 17 gibt das Moment M_{F} an, das vom Fahrer in Abhängigkeit vom Lenkwinkel δ am Lenkrad ausgeübt werden muss. Die Abhängigkeit von der Fahrzeuggeschwindigkeit und vom Untergrund ist hier nicht dargestellt. Wie zu erkennen ist, muss der Fahrer mit zunehmendem Lenkwinkel δ ein größeres Moment M_{F} aufbringen.

Wenn der Fahrer die durch den Fahrspurverlauf vorgegebene Idealspur verlässt, wird der Lenkung 12 ein zusätzliches Führungsmoment M_{A} aufgeprägt, wodurch sich das am Lenkrad wirkende Moment M_{F} in Richtung der Pfeile a,b ändert. Wenn der Fahrer das Lenkrad zu weit eingeschlagen hat, wird das Gesamt-Unterstützungsmoment Mᵤ' reduziert, wodurch sich das am Lenkrad wirkende Moment M_{F} erhöht (Pfeil a) und der Fahrer eine höhere Gegenkraft spürt. Bei einem zu geringen Lenkradeinschlag wird das am Lenkrad wirkende Moment M_{F} entsprechend reduziert (Pfeil b), wodurch der Fahrer eine geringere Gegenkraft spürt. Durch diese Beeinflussung der Lenkung wird jedoch das charakteristische Lenkverhalten der Lenkung verändert, d.h. der Fahrer spürt am Lenkrad plötzlich eine unterschiedliche Gegenkraft. Das unterschiedliche Lenkgefühl ist für den Fahrer ungewohnt und kann irritierend sein.

Es ist daher die Aufgabe der vorliegenden Erfindung, eine Kfz-Lenkanlage zu schaffen, die den Fahrer beim Halten der Fahrspur unterstützt, deren Lenkcharakteristik sich aus Sicht des Fahrers jedoch nicht verändert.

Gelöst wird diese Aufgabe gemäß der Erfindung durch die im Patentanspruch 1 sowie im Patentanspruch 5 angegebenen Merkmale. Weitere Ausgestaltungen der Erfindung sind Gegenstand von Unteransprüchen.

Ein wesentlicher Gedanke der Erfindung besteht darin, die Nulllage der Lenkung (in der keine Kräfte auf das Lenkrad wirken) immer auf einen Lenkwinkel δ_{Ref} einzustellen, der durch den Fahrspurverlauf und die Position des Fahrzeugs vorgegeben ist, wobei sich die Nulllage der Lenkung mit dem Referenzlenkwinkel (δ_{Ref}) laufend verschiebt. Dies hat zur Folge, dass der Fahrer, solange er sich auf bzw. nahezu auf einer durch den Fahrspurverlauf vorgegebenen Idealspur bewegt, keinerlei Rückstellkräfte am Lenkrad verspürt (genauso wie bei Geradeausfahrt bei einer herkömmlichen Lenkung). Verlässt der Fahrer diese Idealspur in die eine oder andere Richtung, übt das Lenksystem automatisch eine Rückstellkraft bzw. ein entsprechendes Moment am Lenkrad aus, das in Richtung der Nulllage gerichtet ist und den Fahrer wieder in die Idealspur zurückführen soll. Dies hat den wesentlichen Vorteil, dass die Lenkcharakteristik aus Sicht des Fahrers konstant bleibt und die Lenkkraft nur von der Höhe der Abweichung zur Idealspur abhängt.

Ein erfindungsgemäßes Lenksystem mit Hilfskraftunterstützung umfasst entsprechend einen Lenksteller, mit dem ein Unterstützungsmoment auf die Lenkung des Fahrzeugs ausgeübt werden kann, ein Fahrspurerkennungssystem, mit dem der Fahrspurverlauf sowie die relative Position des Fahrzeugs bestimmt werden können, ein Referenzlenkwinkelermittlungsmittel bzw. ein Referenzmodell, das in Abhängigkeit von den vom Fahrspurerkennungssystem erhaltenen Daten einen Referenzlenkwinkel berechnet und ein Übertragungsglied zum Berechnen des Unterstützungsmoments, das auf die Lenkung übertragen werden soll. Das Übertragungsglied ist dabei erfindungsgemäß derart ausgelegt, dass die Nulllage der Lenkcharakteristik gleich dem Referenzlenkwinkel ist und sich in Abhängigkeit vom Kurvenradius der Fahrbahn mit dem Referenzlenkwinkel verschiebt.

Die Lenkcharakteristik ist vorzugsweise bezüglich ihrer Nulllage symmetrisch. Dies hat den Vorteil, dass der Fahrer unabhängig von der Richtung der Abweichung am Lenkrad die gleichen Rückstellkräfte erfährt (ähnlich wie bei einer herkömmlichen Lenkung bei Abweichung von der Geradeausfahrt).

Die an der Lenkung beim Abweichen von der Idealspur auftretenden Rückstellkräfte sind so ausgelegt, dass sie vom Fahrer vorzugsweise übersteuert werden können.

Die Höhe der vom Lenksystem bei einer Abweichung ausgeübten Rückstellkräfte sind vorzugsweise abhängig, insbesondere linear abhängig von der Höhe der Abweichung von der Idealspur. Das Unterstützungsmoment ist entsprechend eine Funktion der Abweichung von der Idealspur. Das Lenksystem ist vorzugsweise derart eingerichtet, dass die am Lenkrad wirkenden Rückstellkräfte mit zunehmender Abweichung von der Idealspur zunehmen.

Gemäß einer bevorzugten Ausführungsform der Erfindung wird das am Lenkrad wirkende Moment auf einen vorgegebenen Wert geregelt. Durch unterschiedliche Fahrbedingungen wie z.B. unterschiedliche Fahrgeschwindigkeiten oder Untergrund-Beschaffenheiten, ändert sich das an den gelenkten Rädern wirkende Rückstellmoment. Der Fahrer soll bei einer Änderung der Fahrbedingungen jedoch keine Änderung der Lenkkräfte am Lenkrad wahrnehmen. Solange sich der Fahrer auf der bzw. nahezu auf der Idealspur bewegt, sollten die Lenkkräfte stetig etwa gleich Null sein. Es wird daher vorgeschlagen, das am Lenkrad wirkende Moment auf einen vorgegebenen Wert zu regeln. Das am Lenkrad wirkende Moment wird hierzu vorzugsweise mittels Momentensensoren gemessen.

Die Erfindung wird nachstehend anhand der beigefügten Zeichnungen beispielhaft näher erläutert. Es zeigen:
Fig. 1 eine schematische Blockdarstellung einer aus dem Stand der Technik bekannten Kfz-Lenkanlage mit LKS-Funktion;
Fig. 2 eine typische Lenkcharakteristik einer aus dem Stand der Technik bekannten Lenkanlage;
Fig. 3 eine schematische Blockdarstellung einer Kfz-Lenkanlage gemäß einer Ausführungsform der Erfindung; und
Fig. 4 die Lenkcharakteristik einer erfindungsgemäßen Kfz-Lenkanlage gemäß einer Ausführungsform der Erfindung.

Bezüglich der Erläuterung der Fig. 1 und 2 wird auf die Beschreibungseinleitung verwiesen.

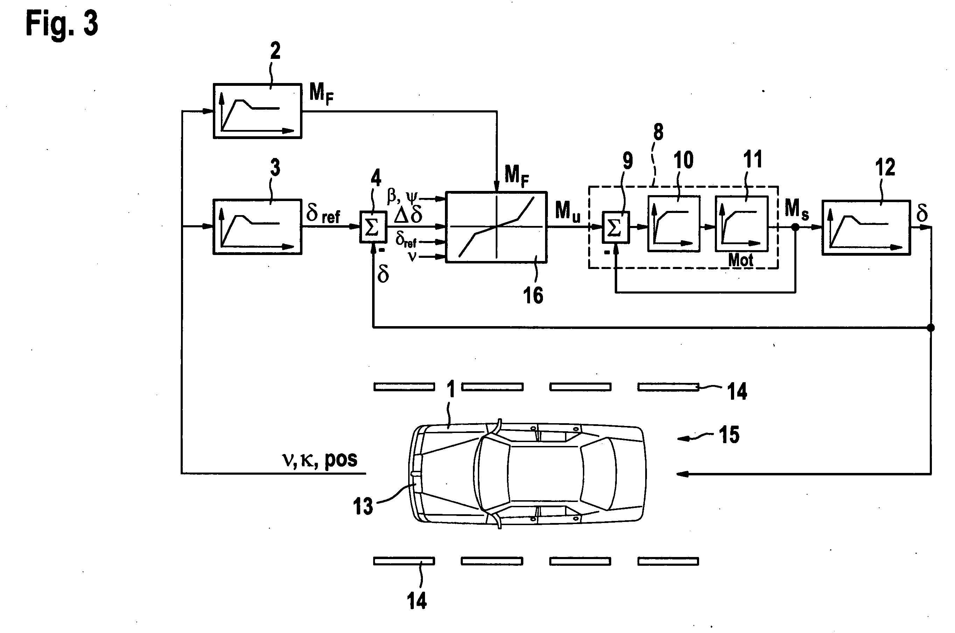

Fig. 3 zeigt eine schematische Darstellung einer Kfz-Lenkanlage gemäß einer Ausführungsform der Erfindung, die den Fahrer beim Halten des Fahrzeugs in der Fahrspur unterstützt. Gleiche Elemente wie in Fig. 1 sind dabei mit gleichen Bezugszeichen bezeichnet. Im unteren Bereich der Fig. 3 ist ein Fahrzeug 1 dargestellt, das sich in seiner Fahrspur 15 mit einer Geschwindigkeit v vorwärts bewegt. Die Fahrspur 15 ist durch seitliche Markierungen 14 begrenzt.

Das Fahrzeug umfasst ein Fahrspurerkennungssystem 13, mit dem die Krümmung der Fahrspur 15 und die relative Position des Fahrzeugs 1 in der Fahrspur 15 bestimmt werden können. Das Fahrspurerkennungssystem 13 kann beispielsweise als Videosystem mit einer Signalverarbeitungssoftware realisiert sein, die aus den Videosignalen die Fahrspurkrümmung als auch die Ablage und Orientierung des Fahrzeugs 1 ermittelt. Wahlweise könnten auch andere Systeme, wie z.B. Magnetsensoren, die die Fahrzeugposition in Verbindung mit in der Fahrbahn integrierten Magneten bestimmt oder auch Radarsensoren vorgesehen sein. Eine Satelliten gestützte Bestimmung der gesuchten geometrischen Daten (Fahrspurkrümmung, Ablage, Orientierung) ist ebenfalls denkbar.

Die ermittelten geometrischen Daten werden dann einem Referenzmodell (Algorithmus) zugeführt, der in Abhängigkeit davon einen Referenzlenkwinkel δ_{Ref} berechnet, der an der Lenkung 12 eingeschlagen werden müsste, um das Fahrzeug 1 optimal in seiner Fahrspur 15 zu halten.

Aus dem am Fahrzeug 1 eingestellten Lenkwinkel δ bzw. Lenkradwinkel und dem Referenzlenkwinkel δ_{Ref} wird nachfolgend eine Differenz Δδ berechnet. Hierzu ist ein Addierknoten 4 vorgesehen, dem die entsprechenden Größen δ, δ_{Ref} zugeführt werden.

Das Herzstück der Lenkanlage bildet ein Übertragungsglied 16, das in Abhängigkeit vom Fahrzustand (Lenkwinkel δ, Fahrgeschwindigkeit, Fahrbahnbeschaffenheit, etc. ...) ein Unterstützungsmoment Mᵤ ermittelt, das auf die Lenkung 12 ausgeübt wird. Das Übertragungsglied 16 erzeugt hier ein Unterstützungsmoment Mᵤ, das so groß ist, dass die am Lenkrad wirkenden Kräfte etwa gleich Null sind und der Fahrer kein Rückstellmoment verspürt, wenn sich das Fahrzeug 1 auf der Idealspur bewegt. D.h., das Lenkrad ist kräftefrei, wenn die Winkelabweichung Δδ gleich Null ist oder zumindest innerhalb vorgegebener Grenzen liegt. Wenn das Fahrzeug 1 in seiner Spur 15 fährt, verhält sich die Lenkung 12 auch bei einer Kurvenfahrt so, als würde das Fahrzeug 1 (mit einer herkömmlichen Lenkung) geradeaus fahren.

Da das am Lenkrad wirkende Rückstellmoment von verschiedenen Fahrzustandsgrößen, wie z.B. der Fahrgeschwindigkeit und der Untergrundbeschaffenheit abhängig ist, umfasst das Übertragungsglied 16 vorzugsweise eine Regeleinrichtung (nicht gezeigt), mit der das Rückstellmoment geregelt werden kann. Dadurch wird sichergestellt, dass die am Lenkrad wirkenden Lenkkräfte auch bei einer Änderung der Fahrbedingungen konstant bleiben, solange das Fahrzeug 1 seiner Fahrspur 15 folgt. Das Übertragungsglied 16 verarbeitet neben dem Referenzlenkwinkel δ_{Ref}, der Fahrgeschwindigkeit v, der Winkelabweichung Δδ und dem Lenkrad- bzw. Fahrermoment M_{F} vorzugsweise auch den Schwimmwinkel und die Gierrate β des Fahrzeugs.

Fig. 4 zeigt die zugehörige Lenkcharakteristik, die sich aufgrund dieser Auslegung des Übertragungsglieds 16 ergibt. Wie zu erkennen ist, ist die Nulllage der Lenkcharakteristik 17 immer gleich dem Referenzwinkel δ_{Ref}. Wenn sich der Referenzlenkwinkel δ_{Ref} aufgrund einer Änderung der Fahrbahnkrümmung ebenfalls ändert, verschiebt sich die Nulllage der Lenkcharakteristik 17 entsprechend (siehe Pfeile nach links und rechts). Solange der Fahrer die Idealspur hält bzw. die Winkelabweichung Δδ kleiner ist als ein vorgegebener Schwellenwert, ist das am Lenkrad wirkende Rückstellmoment (bzw. das vom Fahrer auszuübende Moment M_{F}) gleich Null. Wenn der Fahrer dagegen die Idealspur verlässt und die Winkelabweichung Δδ den Schwellenwert überschreitet, erzeugt das Übertragungsglied 16 ein modifiziertes Unterstützungsmoment M_{U}. Dadurch wird am Lenkrad ein Rückstellmoment wirksam, das in Richtung des Referenzwinkels gerichtet ist und den Fahrer darauf hinweist, wie er lenken müsste, um das Fahrzeug 1 in die Idealspur zurück zu führen. Das Rückstellmoment nimmt mit zunehmender Abweichung des Lenkwinkels δ vom Referenzlenkwinkel δ_{Ref} zu. Das zugehörige Unterstützungsmoment Mᵤ wird von einem Lenksteller 11, wie z.B. einem Elektromotor 11 auf die Lenkung 12 übertragen. Das vom Elektromotor 11 erzeugte Servomoment M_{S} wird hier mittels einer Regelschleife mit den Elementen 9,10 geregelt.

### Bezugszeichenliste

- 1: Fahrzeug
- 2: Fahrer
- 3: Referenzmodel
- 4: Addierknoten
- 5: Übertragungsglied
- 6: Führungskennlinie
- 7: Addierknoten
- 8: Lenksteller mit Regelkreis
- 9: Addierknoten
- 10: Übertragungsglied
- 11: Elektromotor
- 12: Lenkung
- 13: Fahrspurerkennungssystem
- 14: Fahrspurmarkierung
- 15: Fahrspur
- 16: Übertragungsglied
- 17: Lenkcharakteristik
- M_{U}: Unerstützungsmoment
- M_{U}': Gesamt-Unerstützungsmoment
- M_{F}: Fahrermoment
- M_{R}: Rückstellmoment
- M_{A}: Führungsmoment
- M_{S}: Servomoment
- δ: Lenkwinkel
- δ_{Ref}: Referenzlenkwinkel
- V: Fahrgeschwindigkeit
- K: Fahrspurkrümmung
- pos: Ablagedaten

## Patentansprüche

1. Lenksystem mit Hilfskraftunterstützung für Kraftfahrzeuge (1), umfassend
- einen Lenksteller (11), mit dem ein Unterstützungsmoment (M_{U}) auf die Lenkung (12) des Fahrzeugs (1) ausgeübt werden kann, und
- ein Referenzlenkwinkelermittlungsmittel, enthaltend ein Referenzmodell (3), das in Abhängigkeit von der Position des Fahrzeugs (1) in seiner Fahrspur (15) einen Referenzlenkwinkel (δ_{Ref}) berechnet,
- wobei das Lenksystem eine vorgegebene Lenkcharakteristik (17) aufweist,
**dadurch gekennzeichnet,**
**dass** das Lenksystem derart ausgelegt ist, dass die Nulllage der Lenkcharakteristik (17) dem Referenzlenkwinkel (δ_{Ref}) entspricht und sich bei einer Änderung des Fahrspurverlaufs (15) mit dem Referenzlenkwinkel (δ_{Ref}) verschiebt, wobei ein Übertragungsglied (16) vorgesehen ist, das ein von Höhe der Abweichung (Δδ) des Lenkwinkels (δ) vom Referenzlenkwinkel (δ_{Ref}) abhängiges Unterstützungsmoment (M_{U}) erzeugt.

2. Lenksystem nach Anspruch 1, **dadurch gekennzeichnet, dass** die Lenkcharakteristik (17) bezüglich der Nulllage (Δδ=0) symmetrisch ist.

3. Lenksystem nach einem der vorhergehenden Ansprüche, **dadurch gekennzeichnet, dass** das Unterstützungsmoment (M_{U}) derart bemessen ist, dass der Fahrer bei Abweichung des Lenkwinkels (δ) vom Referenzlenkwinkel (δ_{Ref}) am Lenkrad eine Kraft erfährt, die in Richtung der Nulllage gerichtet ist.

4. Lenksystem nach Anspruch 2 oder 3, **dadurch gekennzeichnet, dass** das Übertragungsglied (16) einen Regelkreis umfasst, der das am Lenkrad wirkende Moment (M_{F}) auf einen vorgegebenen Wert regelt.

5. Verfahren zum Unterstützen eines Fahrers beim Lenken eines Fahrzeugs (1), umfassend folgende Schritte:
- Ermitteln der Position des Fahrzeugs (1) in seiner Fahrspur (15) und einer den Fahrspurverlauf betreffenden Information mittels eines Fahrspurerkennungssystems (13),
- Berechnen eines Referenzlenkwinkels (δ_{Ref}) in Abhängigkeit von den Fahrspurinformationen und der Position des Fahrzeugs (1) in der Fahrspur (15), und
- Aufbringen eines Unterstützungsmoments (12) auf die Lenkung (12) des Fahrzeugs;
- wobei das Lenksystem (12) eine vorgegebene Lenkcharakteristik (17) aufweist,
**dadurch gekennzeichnet, dass** ein Unterstützungsmoment (M_{U}) bestimmt wird, das derart bemessen ist, dass die Nulllage der Lenkcharakteristik (17) dem Referenzlenkwinkel (δ_{Ref}) entspricht und sich bei einer Änderung des Fahrspurverlaufs (15) mit dem Referenzlenkwinkel (δ_{Ref}) verschiebt,
wobei bei einer Abweichung des Lenkwinkels (δ) vom Referenz-lenkwinkel (δ_{Ref}) ein von der Höhe der Abweichung (Δδ) abhängiges Unterstützungsmoment (M_{U}) auf die Lenkung (12) ausgeübt wird.

6. Verfahren nach Anspruch 5, **dadurch gekennzeichnet, dass** das Unterstützungsmoment (M_{U}) derart bemessen ist, dass der Fahrer mit zunehmender Abweichung (Δδ) des Lenkwinkels (δ) vom Referenzlenkwinkel (δ_{Ref}) eine zunehmende Kraft am Lenkrad erfährt, die in Richtung der Nulllage gerichtet ist.

7. Verfahren nach einem der Ansprüche 5 bis 6, **dadurch gekennzeichnet, dass** das am Lenkrad anliegende Moment (M_{F}) auf einen vorgegebenen Wert geregelt wird.

8. Steuergerät, enthaltend Mittel, die für die Durchführung des Verfahrens nach Anspruch 5 ausgestaltet sind.

## Claims

1. Power-assisted steering system for motor vehicles (1), comprising
- a steering actuator (11) with which an assisting torque (Mᵤ) can be applied to the steering system (12) of the vehicle (1), and
- a reference steering angle-determining means, containing a reference model (3) which calculates a reference steering angle (δ_{Ref}) as a function of the position of the vehicle (1) in its lane (15),
- wherein the steering system has a predefined steering characteristic (17),
**characterized in that**
the steering system is configured in such a way that the straight-ahead position of the steering characteristic (17) corresponds to the reference steering angle (δ_{Ref}), and when the lane profile (15) changes said straight-ahead position moves with the reference steering angle (δ_{Ref}), wherein a transmission element (16) is provided which generates an assisting torque (Mᵤ) which is dependent on the level of the difference (Δδ) of the steering angle (δ) from the reference steering angle (δ_{Ref}).

2. Steering system according to Claim 1, **characterized in that** the steering characteristic (17) is symmetrical with respect to the straight-ahead position (Δδ = 0).

3. Steering system according to one of the preceding claims, **characterized in that** the assisting torque (Mᵤ) is dimensioned in such a way that, when the steering angle (δ) differs from the reference steering angle (δ_{Ref}), the driver experiences at the steering wheel a force which is directed in the direction of the straight-ahead position.

4. Steering system according to Claim 2 or 3, **characterized in that** the transmission element (16) comprises a closed-loop control circuit which adjusts the torque (M_{F}) acting on the steering wheel to a predefined value.

5. Method for assisting a driver in steering a vehicle (1), comprising the following steps:
- determination of the position of the vehicle (1) in its lane (15) and determination of information relating to the lane profile by means of a lane-detection system (13),
- calculation of a reference steering angle (δ_{Ref}) as a function of the lane information and the position of the vehicle (1) in the lane (15), and
- application of an assisting torque (Mᵤ) to the steering system (12) of the vehicle;
- wherein the steering system (12) has a predefined steering characteristic (17),
**characterized in that** an assisting torque (M_{U}) is determined which is dimensioned in such a way that the straight-ahead position of the steering characteristic (17) corresponds to the reference steering angle (δ_{Ref}), and when the lane profile (15) changes said straight-ahead position moves with the reference steering angle (δ_{Ref}),
wherein, when the steering angle (δ) differs from the reference steering angle (δ_{Ref}), an assisting torque (Mᵤ) which is dependent on the level of the difference (Δδ) is applied to the steering system (12).

6. Method according to Claim 5, **characterized in that** the assisting torque (Mᵤ) is dimensioned in such a way that as the difference (Δδ) of the steering angle (δ) from the reference steering angle (δ_{Ref}) increases, the driver experiences at the steering wheel an increasing force in the direction of the straight-ahead position.

7. Method according to one of Claims 5 to 6, **characterized in that** the torque (M_{F}) which is applied to the steering wheel is adjusted by a closed-loop control to a predefined value.

8. Control unit, containing means which are configured to carry out the method according to Claim 5.

## Revendications

1. Système de direction équipé d'un moyen d'assistance pour des véhicules automobiles (1) comprenant
- un actionneur de direction (11) permettant d'exercer un couple d'assistance (Mu) sur la direction (12) du véhicule (1), et
- un moyen de détermination d'un angle de référence comportant un modèle de référence (3) qui calcule un angle de direction de référence (δ_{Ref}) en fonction de la position du véhicule (1) sur sa voie (15),
le système de direction ayant une caractéristique de direction (17) prédéfinie,
**caractérisé en ce que**
le système de direction est conçu pour que la position zéro de la caractéristique de direction (17) corresponde à l'angle de direction de référence (δ_{Ref}) et que cet angle se décale avec l'angle de direction de référence (δ_{Ref}) pour une variation du trajet de la voie (15) du véhicule, un organe de transmission (16) étant prévu pour générer un couple d'assistance (Mu) dépendant de l'amplitude de l'écart (Δδ) de l'angle de direction (δ) par rapport à l'angle de référence (δ_{Ref}).

2. Système de direction selon la revendication 1,
**caractérisé en ce que**
la caractéristique de direction (17) est symétrique par rapport à la position 0 (Δδ = 0).

3. Système de direction selon l'une des revendications précédentes,
**caractérisé en ce que**
le couple d'assistance (Mu) est dimensionné pour qu'en cas d'écart de l'angle de direction (δ) par rapport à l'angle de direction (δ_{Ref}), le volant de direction subisse une force dirigée dans le sens de la position 0.

4. Système de direction selon la revendication 2 ou 3,
**caractérisé en ce que**
l'organe de transmission (16) comprend un circuit de régulation qui régule le couple (M_{F}) agissant sur le volant de direction selon une valeur prédéfinie.

5. Procédé d'assistance d'un conducteur pour guider un véhicule (1) comprenant les étapes suivantes :
- détermination de la position du véhicule (1) sur sa voie de circulation (15) et d'une information concernant le tracé de la voie de circulation à l'aide d'un système de reconnaissance (13) de voie de circulation,
- calcul d'un angle de direction de référence (δ_{Ref}) en fonction des informations de voie de circulation et de la position du véhicule (1) dans la voie de circulation (15) et
- application d'un couple d'assistance (Mu) à la direction (12) du véhicule,
le système de direction (12) ayant une caractéristique de direction (17) prédéfinie,
**caractérisé en ce qu'**
on détermine un couple d'assistance (Mu) dimensionné pour que la position 0 de la caractéristique de direction (17) corresponde à l'angle de direction de référence (δ_{Ref}) et pour qu'il se déplace avec l'angle de direction de référence (δ_{Ref}) en cas de variation du trajet sur la voie de circulation (15),
et en cas d'écart de l'angle de direction (δ) par rapport à l'angle de direction de référence (δ_{Ref}), un couple d'assistance (Mu) dépendant de l'amplitude de l'écart (Δδ) est exercé sur la direction (12).

6. Procédé selon la revendication 5,
**caractérisé en ce que**
le couple d'assistance (M_{U}) est dimensionné pour que le conducteur subisse une force croissante appliquée au volant de direction en fonction de l'augmentation de l'écart (Δδ) de l'angle de direction (δ) par rapport à l'angle de direction de référence (δ_{Ref}), cette force étant dirigée dans le sens de la position O.

7. Procédé selon l'une des références 5 à 6,
**caractérisé en ce que**
le couple (M_{F}) appliqué au volant de direction est régulé sur une valeur prédéfinie.

8. Appareil de commande comportant des moyens conçus pour la mise en oeuvre du procédé selon la revendication 5.
